# EUROPEAN PATENT APPLICATION

(11) **EP 4 258 381 A1**
(43) Date of publication of application: **11.10.2023**
(21) Application number: 22878929.3
(22) Date of filing: 06.10.2022
(51) Int. Cl.: H01M 4/134, H01M 4/133, H01M 4/62, H01M 4/38, H01M 4/587, H01M 4/36, H01M 10/052, H01M 4/02

(54) **ANODE FOR LITHIUM SECONDARY BATTERY, AND LITHIUM SECONDARY BATTERY COMPRISING SAME**

(30) Priority: 07.10.2021 KR 20210133341
(71) Applicant: Samsung SDI Co., Ltd., Yongin-si, Gyeonggi-do 17084 (KR)
(72) Inventor: LEE, Jungmin, Yongin-si, Gyeonggi-do 17084 (KR); KIM, Minjae, Yongin-si, Gyeonggi-do 17084 (KR); AHN, Won-Gi, Yongin-si, Gyeonggi-do 17084 (KR); LEE, Kukjoo, Yongin-si, Gyeonggi-do 17084 (KR)
(74) Representative: Marks & Clerk LLP
(86) International application number: PCT/KR2022/015059
(87) International publication number: WO 2023/059108

(57) **Abstract**

In an embodiment, disclosed are a negative electrode for a rechargeable lithium battery includes a current collector, a first active material layer on the current collector, and a second active material layer on the first active material layer, wherein at least one of the first active material layer and the second active material layer includes a silicon-based active material and a binder, the binder includes a copolymer (A) and a copolymer (B), the copolymer (A) includes a unit (a-1) derived from a (meth)acrylic acid-based monomer and a unit (a-2) derived from a (meth)acrylonitrile monomer, and the copolymer (B) includes a unit (b-1) derived from an aromatic vinyl-based monomer and a unit (b-2) derived from an ethylenically unsaturated monomer that is at least one of an unsaturated carboxylic acid alkyl ester monomer, a (meth)acrylic acid-based monomer, an unsaturated carboxylic acid amide monomer, and a conjugated diene monomer, and a rechargeable lithium battery including the same.

## Description

### BACKGROUND OF THE INVENTION

### (a) Field of the Invention

A negative electrode for a rechargeable lithium battery and a rechargeable lithium battery including the same are disclosed.

### (b) Description of the Related Art

A portable information device such as a cell phone, a laptop, a smart phone, and the like or an electric vehicle has used a rechargeable lithium battery having high energy density and easy portability as a driving power source. Recently, research has been actively conducted to use a rechargeable lithium battery with large capacity and high energy density as a driving power source or power storage power source for hybrid or electric vehicles.

As an example of a method for increasing the capacity of a rechargeable lithium battery, a silicon-containing active material for a negative electrode may be used. When an active material contains silicon atoms having a larger lithium intercalation/deintercalation than a conventional carbon-based active material is to applied to the negative electrode, battery capacity may be improved. However, since the silicon-based active material has a large volume change accompanying the lithium intercalation and deintercalation, a negative active material layer may violently expand and contract during the charge and discharge. As a result, electron conductivity between negative active materials is lowered, and the negative active materials with a current collector is blocked from election movement, deteriorating cycle characteristics of the rechargeable battery.

In order to solve this problem, research on changing a structure or composition of the silicon-based negative active material is in progress, or research on a negative electrode binder has been conducted. However, there have been limitations of practically apply the silicon-based negative active material, improving no battery cycle characteristics, insufficiently suppressing electrode expansion, and the like.

### SUMMARY OF THE INVENTION

The present invention provides a negative electrode with a multilayer structure, which is effectively suppressed from expansion by the silicon-based negative active material, realizes high capacity, and improves cycle characteristics, and a rechargeable lithium battery including the same.

In an embodiment, a negative electrode for a rechargeable lithium battery includes a current collector, a first active material layer on the current collector, and a second active material layer on the first active material layer wherein the binder includes a copolymer (A) and a copolymer (B), and the copolymer (A) includes a unit (a-1) derived from a (meth)acrylic acid-based monomer and a unit (a-2) derived from a (meth)acrylonitrile monomer, and the copolymer (B) includes a unit (b-1) derived from an aromatic vinyl-based monomer and a unit (b-2) derived from an ethylenically unsaturated monomer that is at least one of an unsaturated carboxylic acid alkyl ester monomer, a (meth)acrylic acid-based monomer, an unsaturated carboxylic acid amide monomer, and a conjugated diene monomer.

In another embodiment, a rechargeable lithium battery including the negative electrode, the positive electrode, and an electrolyte is provided.

A negative electrode for a rechargeable lithium battery according to an embodiment and a rechargeable lithium battery including the same have very high capacity and excellent battery cycle characteristics while effectively suppressing electrode expansion due to a silicon-based negative active material.

### BRIEF DESCRIPTION OF THE DRAWINGS

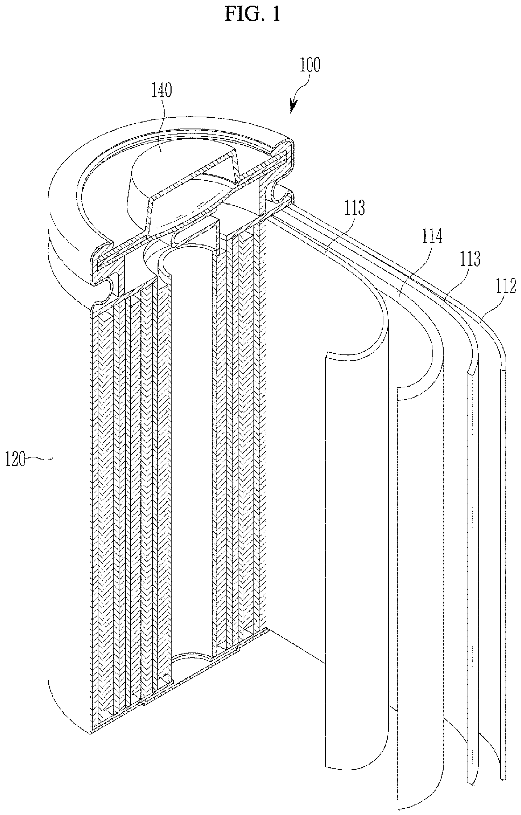

FIG. 1 is a schematic view illustrating a rechargeable lithium battery according to an embodiment.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In an embodiment, provided is a negative electrode for a rechargeable lithium battery including a current collector, a first active material layer on the current collector, and a second active material layer on the first active material layer. Herein, at least one of the first active material layer and the second active material layer includes a silicon-based active material and a binder, and the binder includes a copolymer (A) and a copolymer (B).

The copolymer (A) is a copolymer including a unit (a-1) derived from a (meth)acrylic acid-based monomer and a unit (a-2) derived from a (meth)acrylonitrile monomer. The copolymer (B) is a copolymer including a unit (b-1) derived from an aromatic vinyl-based monomer; and a unit (b-2) derived from an ethylenically unsaturated monomer that is at least one of an unsaturated carboxylic acid alkyl ester monomer, a (meth)acrylic acid-based monomer, an unsaturated carboxylic acid amide monomer, and a conjugated diene monomer.

The negative electrode for a rechargeable lithium battery is a type of multilayer negative electrode having two or more active material layers, and may implement high capacity and high energy density.

At least one of the first active material layer and the second active material layer includes a silicon-based active material. The silicon-based active material means an active material containing silicon. The silicon-based active material has a large volume change due to charging and discharging, and the negative active material layer including the same expands and contracts violently. Accordingly, problems such as a decrease in electron conductivity between the negative active materials and blocking of electron movement between the negative active material layer and the current collector frequently occur. However, the negative electrode according to an embodiment can solve this problem by using a specific binder in the negative active material layer including the silicon-based active material, and at the same time improve basic battery characteristics such as high temperature cycle-life characteristics of the battery.

### Binder

Since the binder according to an embodiment includes the copolymer (A) and the copolymer (B), expansion of the electrode of the silicon-based negative electrode even with a small content may be suppressed and cycle characteristics may be improved at the same time.

The copolymer (A) and the copolymer (B) may be physically mixed, or the copolymer (A) and the copolymer (B) may be chemically bonded to exist in the form of dispersed particles.

The binder may be, for example, in a form in which the copolymer (A) and the copolymer (B) are individually mixed with each other. That is, the binder may be in a state in which the copolymer (A) and the copolymer (B) are physically mixed rather than having a core-shell structure. In this case, the binder may exhibit both the characteristics of the copolymer (A) and the copolymer (B), and may effectively suppress electrode expansion while exhibiting excellent binding force.

As another example, the binder may be one in which the copolymer (A) and the copolymer (B) are chemically bonded, and at least a portion of the copolymer (B) is surrounded by the copolymer (A). The copolymer (B) may be prepared by copolymerizing in water in the presence of a polymer dispersion stabilizer consisting of the copolymer (A), and thus the water-insoluble copolymer (B) may aggregate into the inside of the binder particles. At least a portion or all of the copolymer (B) may be surrounded by the water-soluble copolymer (A). As an example, the binder may be in the form of a core-shell having the copolymer (B) as a core and the copolymer (A) as a shell. In this case, a close contacting property between components included in the electrode may be improved, and electrode expansion may be efficiently controlled.

The binder may have, for example, a particle shape, and may have for example, a shape such as a spherical shape or an oval shape. Herein, the term "spherical" is understood as a concept including a substantially spherical shape as well as a perfect spherical shape, that is, a shape similar to a spherical shape or a rectangular oval shape.

The binder may include about 30 wt% to about 70 wt% of the copolymer (A) and about 70 wt% to about 30 wt% of the copolymer (B) based on 100 wt% of the binder. In addition, in the binder, a weight ratio of copolymer (A): copolymer (B) may be about 30:70 to about 70:30. When the copolymer (A) and the copolymer (B) are included in the above range, strength, elastic modulus and flexibility of the binder may be improved, electrode expansion may be effectively suppressed, cracks in the negative active material layer may be suppressed, and cycle characteristics of the rechargeable lithium battery may be improved.

The copolymer (A) may include about 30 wt% to about 70 wt% of the unit (a-1) derived from the (meth)acrylic acid-based monomer and about 30 wt% to about 70 wt% of the unit (a-2) derived from (meth)acrylonitrile based on 100 wt% of the copolymer (A). For example, the copolymer (A) may include about 35 wt% to about 65 wt% of the unit (a-1) derived from the (meth)acrylic acid-based monomer and about 35 wt% to about 65 wt% of the unit (a-2) derived from (meth)acrylonitrile. When the content of the unit (a-1) derived from the (meth)acrylic acid-based monomer in the copolymer (A) is less than about 30 wt%, the copolymer (A) may have water-insoluble characteristics, which is not desirable, dispersibility of the negative active material may be reduced, and storage stability of the negative electrode slurry may be deteriorated. When the content of the unit (a-1) derived from the (meth)acrylic acid-based monomer in the copolymer (A) exceeds about 70 wt%, cracks occur in the electrode during application and drying of the negative electrode slurry, and thus it may not be easy to manufacture the negative electrode.

In addition, when the content of the unit (a-2) derived from (meth)acrylonitrile in the copolymer (A) is less than about 30 wt%, close contacting properties of the negative electrode mixture layer to the substrate may be reduced. When the content of the unit (a-2) derived from the (meth)acrylonitrile in the copolymer (A) exceeds about 70 wt%, the copolymer (A) may have water-insoluble characteristics, which is not desirable, dispersibility of the negative active material may be reduced, and storage stability of the negative electrode slurry may be deteriorated.

The (meth)acrylic acid-based monomer may include, for example, at least one of (meth)acrylic acid, an alkali metal salt of (meth)acrylic acid, and an ammonium salt of (meth)acrylic acid. Herein, (meth)acrylic acid means acrylic acid or methacrylic acid. Examples of the alkali metal salt of (meth)acrylic acid may include sodium acrylate, lithium acrylate, potassium acrylate, calcium acrylate, magnesium acrylate, sodium methacrylate, lithium methacrylate, potassium methacrylate, calcium methacrylate, and the like. Examples of the ammonium salt of (meth)acrylic acid may include an ammonia neutralized product, a monoethanolamine neutralized product, a diethanolamine neutralized product, a hydroxylamine neutralized product of (meth)acrylic acid, and the like.

The copolymer (A) may further include a unit (a-3) derived from other monomer copolymerizable with the (meth)acrylic acid-based monomer and/or the (meth)acrylonitrile monomer.

The other monomer copolymerizable with the (meth)acrylic acid-based monomer and/or the (meth)acrylonitrile monomer may include, for example, a hydroxyl group-containing monomer, an amide group-containing monomer, or a combination thereof. The hydroxyl group-containing monomer may be, for example, 2-hydroxyethyl (meth)acrylate, 2-hydroxypropyl (meth)acrylate, 4-hydroxybutyl (meth)acrylate, 2-hydroxyhexyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, N-hydroxy (meth)acrylamide, vinyl alcohol, allyl alcohol, 2-hydroxyethyl vinyl ether, 4-hydroxy Butyl vinyl ether, diethylene glycol monovinyl ether, and the like.

The amide group-containing monomer may be, for example, acrylamide, methacrylamide, diethyl(meth)acrylamide, N-vinylpyrrolidone, N-vinyl-2-pyrrolidone, N-(meth)acryloylpyrrolidone, N,N-dimethylacrylamide, N,N-dimethylmethacrylamide, N,N-diethyl acrylamide, N,N-diethylmethacrylamide, N,N'-methylenebisacrylamide, N,N-dimethylaminopropyl acrylamide, N,N-dimethylaminopropyl methacrylamide, and the like.

The unit (a-3) derived from another monomer copolymerizable with the (meth)acrylic acid-based monomer and/or the (meth)acrylonitrile monomer may be greater than about 0 wt% and less than or equal to about 20 wt%, for example, about 1 wt% to about 15 wt%, or about 1 wt% to about 10 wt% based on 100 wt% of the copolymer (A). When the content of the unit (a-3) derived from the other monomers copolymerizable with the (meth)acrylic acid-based monomer and/or the (meth)acrylonitrile monomer in the copolymer (A) exceeds about 20 wt%, an effect of suppressing the expansion of the electrode of the negative electrode may be reduced.

The copolymer (A) may be a water-soluble copolymer for dispersion stabilization of the polymer.

A viscosity of the copolymer (A) in an aqueous solution of about 7 wt% of solid content may be about 500 mPa·s to about 5000 mPa s, about 500 mPa·s to about 4000 mPa s, about 500 mPa·s to about 3000 mPa s, about 750 mPa·s to about 2500 mPa s, or about 800 mPa·s to about 2000 mPa s. When the viscosity is greater than or equal to about 500 mPa s, a close contacting property of the negative electrode mixture layer to the substrate may be improved, and when it is less than or equal to about 5000 mPa s, the active materials are well dispersed to obtain a battery having excellent cycle characteristics.

The copolymer (B) may include about 35 wt% to about 95 wt% of a unit (b-1) derived from an aromatic vinyl-based monomer and about 5 wt% to about 65 wt% of a unit (b-2) derived from an ethylenically unsaturated monomer based on 100 wt% of the copolymer (B). In this case, flexibility of the binder is improved, cracks do not occur during the application and drying process of the negative electrode slurry, so that the electrode is easy to manufacture, and a close contacting property of the negative electrode mixture layer to the substrate is improved to obtain a battery with excellent cycle characteristics.

Examples of the aromatic vinyl-based monomer may include styrene, α-methylstyrene, methoxy styrene, trifluoromethyl styrene, and divinyl benzene.

The ethylenically unsaturated monomer may be at least one of an unsaturated carboxylic acid alkyl ester monomer, a (meth)acrylic acid-based monomer, an unsaturated carboxylic acid amide monomer, and a conjugated diene-based monomer.

Examples of the unsaturated carboxylic acid alkyl ester monomer may include 2-ethylhexyl (meth)acrylate, methyl (meth)acrylate, ethyl (meth)acrylate, n-butyl (meth)acrylate, tert-butyl (meth)acrylate, cyclohexyl (meth)acrylate, lauryl (meth)acrylate, benzyl (meth)acrylate, isobornyl (meth)acrylate, 2-hydroxyethyl (meth)acrylate, 2-hydroxypropyl (meth)acrylate, 4-hydroxy butyl (meth)acrylate, glycidyl(meth)acrylate, and the like.

Examples of the (meth)acrylic acid-based monomer may include (meth)acrylic acid, maleic acid, fumaric acid, and itaconic acid.

Examples of the unsaturated carboxylic acid amide monomer may include (meth)acrylamide, isopropyl acrylamide, N-methylol acrylamide, N-hydroxy ethylacrylamide, N-hydroxy butylacrylamide, dimethyl acrylamide, diethyl acrylamide, and the like.

A method for preparing a binder including the copolymer (A) and the copolymer (B) according to an embodiment may be a general emulsion polymerization method, an emulsion-free polymerization method (SFEP), a seed polymerization method, a method of polymerization after swelling the seed particles with a monomer, or the like.

A method of preparing the binder may be, for example, as follows. A composition containing (meth)acrylic acid monomer and (meth)acrylonitrile monomer, a polymerization initiator, water, and optionally a dispersant, a chain transfer agent, a pH adjuster, etc. is stirred at room temperature in an airtight container equipped with a stirrer and a heating device in an inert gas atmosphere and emulsified in water. As the emulsification method, a method such as stirring, shearing, ultrasonic waves, etc. may be applied, and a stirring blade, a homogenizer, or the like may be used. Next, the copolymer (A) dispersed in water may be obtained by raising the temperature while stirring to initiate polymerization. The addition method of each monomer during polymerization may be monomer dripping or pre-emulsion dripping other than batch injection, and two or more of these methods may be used in combination.

Herein, a method of forming the binder containing the copolymer (A) and the copolymer (B) may be a method of physically mixing the copolymer (A) and a method of forming composite copolymer particles having a structure in which the copolymer (A) surrounds the copolymer (B) by using the copolymer (A) as a seed particle. For example, the aromatic vinyl-based monomer and ethylenically unsaturated monomer that is at least one of an unsaturated carboxylic acid alkyl ester monomer, a (meth)acrylic acid-based monomer, an unsaturated carboxylic acid amide monomer, and a conjugated diene-based monomer, and a polymerization initiator are added in a system in which the copolymer (A) prepared by the above method is dispersed to grow particles, and the above method may be repeated one or more times, thereby obtaining a binder including copolymer (A) and copolymer (B). As for the preparing apparatus in the case of forming the copolymer (B), the polymerization initiator, water, and a dispersant, a chain transfer agent, a pH adjuster, as needed may use those which are the same as the case of preparing the copolymer (A).

In addition, in the negative electrode for a rechargeable lithium battery according to an embodiment, the active material layer including the silicon-based active material may further include other binders in addition to the binder including the copolymer (A) and the copolymer (B). Here, the other binder may be, for example, a styrene-butadiene rubber, an acrylated styrene-butadiene rubber, an acrylonitrile-butadiene rubber, an acrylic rubber, a butyl rubber, a fluororubber, an ethylene-acrylic acid ester, polyethylene oxide, polyvinylpyrrole, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenolic resin, an epoxy resin, a polyvinyl alcohol, or a combination thereof.

In addition, the active material layer including the silicon-based active material may further include a thickener such as carboxymethyl cellulose, polyacrylic acid, or polyacrylamide.

### Negative Electrode

The negative electrode for a rechargeable lithium battery according to an embodiment is a type of multi-layer negative electrode including a current collector, a first active material layer on the current collector, and a second active material layer on the first active material layer, and may further include a a third active material layer, a fourth active material layer, and the like. Such a negative electrode may implement high capacity and high energy density.

At least one of the first active material layer and the second active material layer includes a silicon-based active material. Here, the active material layer including the silicon-based active material includes the aforementioned binder including the copolymer (A) and copolymer (B).

For example, any one of the first active material layer and the second active material layer may include the silicon-based active material and the binder, and the other may include the carbon-based active material. For example, the first active material layer may include the silicon-based active material and the binder, and the second active material layer may include the carbon-based active material. Conversely, the first active material layer may include the carbon-based active material and the second active material layer may include the silicon-based active material and the aforementioned binder.

As another example, both the first active material layer and the second active material layer may include the silicon-based active material and the aforementioned binder, respectively.

In addition, the active material layer including the silicon-based active material may further include a carbon-based active material. That is, in the negative electrode for a rechargeable lithium battery, at least one of the first active material layer and the second active material layer may include a silicon-based active material, a carbon-based active material, and a binder.

For example, the first active material layer may include a silicon-based active material, a carbon-based active material, and the aforementioned binder, and the second active material layer may include a carbon-based active material. In this case, the second active material layer may or may not include the binder.

As another example, the first active material layer and the second active material layer may each include a silicon-based active material, a carbon-based active material, and a binder. In this case, the silicon content in the first active material layer and the second active material layer may be designed to be different from each other. For example, the content of silicon included in the first active material layer may be set higher than that of silicon included in the second active material layer. In this case, the content of silicon included in the first active material layer may be about 2 to 25 times the content of silicon included in the second active material layer. In addition, the content of silicon in the first active material layer may be about 10 wt% to about 80 wt%, or about 10 wt% to about 25 wt%, based on 100 wt% of the first active material layer, and the content of silicon in the second active material layer may be about 0.1 wt% to about 15 wt% or about 0.1 wt% to about 9 wt% based on 100 wt% of the second active material layer. As another example, the negative electrode may have a concentration gradient in which the content of silicon increases from the second active material layer to the first active material layer.

In these various forms, the aforementioned binder may effectively suppress electrode expansion problem caused by the silicon-based active material.

In the active material layer including the silicon-based active material and the aforementioned binder, the silicon-based active material may be about 20 wt% to about 99 wt%, or about 30 wt% to about 98 wt%, about 40 wt% to about 98 wt%, about 50 wt% to about 98 wt%, about 60 wt% to about 98 wt%, about 70 wt% to about 98 wt%, about 80 wt% to about 98 wt%, or about 90 wt% to about 98 wt% based on 100 wt% of the active material layer.

A content of the total active material including the silicon-based active material in the active material layer may be about 90 wt% to about 99 wt% based on 100 wt% of the active material layer.

In addition, the aforementioned binder, that is, the binder including the copolymer (A) and the copolymer (B) may be included in an amount of about 0.1 wt% to about 10 wt%, for example, about 0.1 wt% to about 9 wt%, about 0.1 wt% to about 8 wt%, about 0.1 wt% to about 7 wt%, or about 0.1 wt% to about 6 wt% based on 100 wt% of the active material layer including the same. Even in a small amount, the binder may effectively suppress electrode expansion phenomenon caused by the silicon-based active material and improve high-temperature cycle-life characteristics of the battery.

The silicon-based active material may specifically be silicon, silicon-carbon composite, SiOₓ (0 < x < 2), a Si-Q alloy (wherein Q is an element selected from an alkali metal, an alkaline earth metal, a Group 13 element, a Group 14 element, a Group 15 element, a Group 16 element, a transition metal, a rare earth element, and a combination thereof, and not Si), or a combination thereof, or a mixture of at least one of them and SiO₂ may be used. The elements Q may include one selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-based active material may include, for example, a silicon-carbon composite including silicon particles and a first carbon-based material. Herein, the first carbon-based material may be crystalline carbon, amorphous carbon, or a combination thereof. When such a silicon-carbon composite is used as a silicon-based active material, stable cycle characteristics may be realized while exhibiting a high capacity.

In the silicon-carbon composite including the silicon particles and the first carbon-based material, a content of the silicon particles may be about 30 wt% to about 70 wt%, for example, about 40 wt% to about 50 wt%. A content of the first carbon-based material may be about 70 wt% to about 30 wt%, for example, about 50 wt% to about 60 wt%. When the silicon particles and the content of the first carbon-based material are included in the above ranges, high capacity characteristics and excellent cycle-life characteristics may be exhibited at the same time.

Alternatively, the silicon-based active material may include a silicon-carbon composite including a core in which silicon particles and a second carbon-based material are mixed and a third carbon-based material surrounding the core. Such a silicon-carbon composite may realize a very high capacity and at the same time improve a capacity retention rate and high-temperature cycle-life characteristics of the battery.

Herein, the third carbon-based material may have a thickness of about 5 nm to about 100 nm. In addition, based on 100 wt% of the silicon-carbon composite, the third carbon-based material may be included in an amount of about 1 wt% to about 50 wt%, the silicon particle may be included in an amount of about 30 wt% to about 70 wt%, and the second carbon-based material may be included in an amount of about 20 wt% to about 69 wt%. When the contents of the silicon particles, the third carbon-based material, and the second carbon-based material are included in the above ranges, discharge capacity is excellent and a capacity retention rate may be improved.

A particle diameter of the silicon particles may be about 10 nm to about 30 µm, for example, about 10 nm to about 1000 nm, or about 20 nm to about 150 nm. When the average particle diameter of the silicon particles is included in the above range, a volume expansion occurring during charging and discharging may be suppressed, and interruption of electron movement due to particle crushing during charging and discharging may be prevented.

In the silicon-carbon composite, for example, the second carbon-based material may be crystalline carbon and the third carbon-based material may be amorphous carbon. That is, the silicon-carbon composite may be a silicon-carbon composite including a core including silicon particles and crystalline carbon and an amorphous carbon coating layer disposed on the surface of the core.

The crystalline carbon may include artificial graphite, natural graphite, or a combination thereof. The amorphous carbon may include pitch carbon, soft carbon, hard carbon, mesophase pitch carbonized product, calcined coke, a carbon fiber, or a combination thereof. The precursor of the amorphous carbon may be a coal-based pitch, mesophase pitch, petroleum-based pitch, coal-based oil, petroleum-based heavy oil, or a polymer resin such as a phenol resin, a furan resin, or a polyimide resin.

The silicon-carbon composite may include about 10 wt% to about 60 wt% of the silicon and about 40 wt% to about 90 wt% of the carbon-based material based on 100 wt% of the silicon-carbon composite. In addition, in the silicon-carbon composite, a content of the crystalline carbon may be about 10 wt% to about 70 wt% and a content of the amorphous carbon may be about 20 wt% to about 40 wt% based on the total weight of the silicon-carbon composite.

The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. As used herein, when a definition is not otherwise provided, an average particle diameter (D50) indicates a diameter of particles having a cumulative volume of 50% by volume in the particle size distribution.

Meanwhile, the negative active material layer including the silicon-based active material may further include a carbon-based active material in addition to the silicon-based active material. When the silicon-based active material and the carbon-based active material are mixed and used, a mixing ratio may be about 1:99 to about 90:10, for example, about 1:99 to about 40:60, about 30:70 to about 70:30, or about 50: 50 to about 90: 10 by weight.

The carbon-based active material may be a carbon-containing active material generally used for a negative electrode, and may include crystalline carbon, amorphous carbon, or a combination thereof. Examples of the crystalline carbon may include graphite such as amorphous, plate-like, flake, spherical or fibrous natural graphite or artificial graphite, and examples of the amorphous carbon may include soft carbon, hard carbon, a mesophase pitch carbonized product, and calcined coke.

On the other hand, according to an embodiment, any one of the first active material layer and the second active material layer may include the silicon-based active material and the aforementioned binder, and the other may include the carbon-based active material wherein the active material layer including the carbon-based active material may include the aforementioned binder, a general negative electrode binder other than the aforementioned binder, or a mixture thereof.

In this case, in the active material layer including the carbon-based active material and the general negative electrode binder, the general negative electrode binder may be included in an amount of about 1 wt% to about 5 wt% based on 100 wt% of the active material layer. Here, the general negative electrode binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, a mixture of one or more of carboxymethyl cellulose, hydroxypropylmethyl cellulose, methyl cellulose, or alkali metal salts thereof may be used. As the alkali metal, Na, K or Li may be used. The amount of the thickener used may be about 0.1 parts by weight to about 3 parts by weight based on 100 parts by weight of the negative active material.

At least one of the first active material layer and the second active material layer may further include a conductive material. The conductive material is included to provide electrode conductivity and any electrically conductive material may be used as a conductive material unless it causes a chemical change in a battery. Examples of the conductive material include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminum silver, and the like; a conductive polymer such as a polyphenylene derivative; or a mixture thereof. The conductive material may be included in an amount of about 0.1 wt% to about 5 wt%, or about 1 wt% to about 4 wt% based on 100 wt% of the active material layer including the conductive material.

The current collector may include one selected from a copper foil, a nickel foil, a stainless steel foil, a titanium foil, a nickel foam, a copper foam, a polymer substrate coated with a conductive metal, and a combination thereof.

### Positive Electrode

A positive electrode for a rechargeable lithium battery includes a current collector and a positive active material layer on the current collector. The positive electrode may include a positive active material, and may further include a binder and/or a conductive material.

The positive active material may include lithiated intercalation compounds that reversibly intercalate and deintercalate lithium ions. Examples of the positive active material include a compound represented by any one of the following chemical formulas:

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GeO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2); and

LiₐFePO₄ (0.90 ≤ a ≤ 1.8).

In chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compound may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound of the coating layer may be amorphous or crystalline. The coating element included in the coating layer may include Mg, Al, Co, K, Na, Ca, Si, Ti, V, Sn, Ge, Ga, B, As, Zr, or a combination thereof. The coating layer forming process may use a method that does not adversely affect the physical properties of the positive active material, for example, spray coating, dipping, and the like.

The positive active material may be, for example, at least one type of lithium composite oxide represented by Chemical Formula 11.

[Chemical Formula 11] LiₐM¹¹_{1-y11-z11}M¹²_{y11}M¹³_{z11}O₂

In Chemical Formula 11, 0.9≤a≤1.8, 0≤y11≤1, 0≤z11≤1, 0≤y11+z11<1, and M¹¹, M¹², and M¹³ are each independently at least one element selected from Ni, Co, Mn, Al, Mg, Ti, Fe, or a combination thereof.

For example, M¹¹ may be Ni and M¹² and M¹³ may each independently be a metal of Co, Mn, Al, Mg, Ti, or Fe. As a specific example, M¹¹ may be Ni, M¹² may be Co, and M¹³ may be Mn or Al, but the present disclosure is not limited thereto.

In a specific embodiment, the positive active material may be a lithium composite oxide represented by Chemical Formula 12.

[Chemical Formula 12] Liₓ₁₂Ni_{y12}Co_{z12}M¹⁴_{1-y12-z12}O₂

In Chemical Formula 12, 0.9≤x12≤1.2, 0.5≤y12≤1, and 0≤z12≤0.5, and M¹⁴ is selected from Al, B, Ce, Cr, F, Mg, Mn, Mo, Nb, P, S, Si, Sr, Ti, V, W, Zr, or a combination thereof.

A content of the positive active material may be about 90 wt% to about 98 wt%, for example about 90 wt% to about 95 wt% based on the total weight of the positive active material layer. Each content of the binder and the conductive material may be about 1 wt% to about 5 wt% based on the total weight of the positive active material layer.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is used to impart conductivity to the electrode, and any material may be used as long as it does not cause chemical change in the battery to be configured and is an electron conductive material. Examples of the conductive material may include a carbon-based material such as natural graphite, artificial graphite, carbon black, acetylene black, ketjen black, carbon fiber, carbon nanotube, and the like; a metal-based material of a metal powder or a metal fiber, and the like including copper, nickel, aluminum silver, and the like; a conductive polymer such as a polyphenylene derivative; or a mixture thereof.

The current collector may include an aluminum foil, but is not limited thereto.

### Rechargeable Lithium Battery

Another embodiment provides a rechargeable lithium battery including a positive electrode, a negative electrode, a separator between the positive electrode and the positive electrode, and an electrolyte.

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

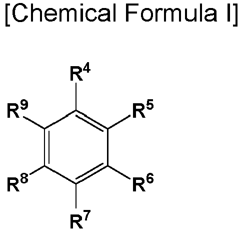

In Chemical Formula I, R⁴ to R⁹ are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylene carbonate or an ethylene carbonate-based compound of Chemical Formula II in order to improve cycle-life of a battery.

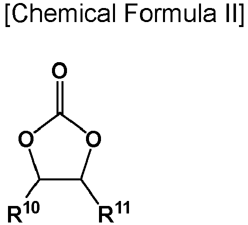

In Chemical Formula II, R¹⁰ and R¹¹ are the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and fluorinated C1 to C5 alkyl group, but both of R¹⁰ and R¹¹ are not hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide): LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxolato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, separator may be selected from a glass fiber, polyester, polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for these batteries pertaining to this disclosure are well known in the art.

Hereinafter, examples of the present invention and comparative examples are described. It is to be understood, however, that the examples are for the purpose of illustration and are not to be construed as limiting the present disclosure.

### Example 1

### (1) Preparation of Binder

In a 0.5 L four-necked flask equipped with a stirrer, a thermometer, a cooling tube, and a liquid feeding pump, 270 g of water is put, and an internal pressure thereof is reduced to 20 mmHg with an aspirator and returned to normal pressure with nitrogen. Subsequently, the flask is maintained under the nitrogen atmosphere, and the water is heated to 60°C in an oil bath, while stirring. Then, 0.12 g of ammonium persulfate is dissolved in 5 g of water to prepare an ammonium persulfate aqueous solution, and the ammonium persulfate aqueous solution is added to the flask.

The ammonium persulfate aqueous solution is added to the water in the flask, and a mixture of 19.4 g of acrylic acid (Wako Pure Chemical Industries, Ltd.) and 9.0 g of acrylonitrile (Wako Pure Chemical Industries, Ltd.) is added dropwise thereto. The aqueous solution in the flask is continuously stirred for 4 hours and then, heated to 80 °C. In addition, the aqueous solution is continuously stirred for 2 hours. The aqueous solution is cooled to room temperature, and 15 g of aqueous ammonia is added thereto and then, stirred.

The aqueous solution in the flask is cooled to room temperature, and about 1 ml of the aqueous solution is put in an aluminum pan and dried on a hot plate heated to 160 °C for 15 minutes. Subsequently, the residue is measured with respect to mass, which is used to calculate mass% (i.e., mass% of nonvolatile matter) of the residue. The process completes a synthesis of an acrylic acid ammonium/acrylonitrile copolymer corresponding to a copolymer (A).

The copolymer (A) is mixed with styrene-butadiene rubber corresponding to a copolymer (B) in a weight ratio of 40:60, preparing a final binder.

### (2) Manufacture of Negative Electrode

14.55 wt% of a silicon-based active material, 82.45 wt% of an artificial graphite active material, and 0.8 wt% of the binder are dispersed, preparing first negative active material slurry. The first negative active material slurry is coated on a copper current collector and then, dried, forming a first active material layer. Herein, the silicon-based active material uses a silicon-carbon composite having a core including artificial graphite and silicon particles and a soft carbon coated on the surface of the core. The silicon particles have an average particle diameter (D50) of about 100 nm, and the soft carbon coating layer has a thickness of about 20 nm.

97 wt% of artificial graphite, 1 wt% of carboxymethyl cellulose, and 2 wt% of styrene-butadiene rubber are mixed in a water solvent to prepare a second negative active material slurry. This is coated on the first active material layer and dried to prepare a second active material layer.

The current collector, the first active material layer, and the second active material layer stacked in this order are compressed by a roll press to manufacture a negative electrode.

### (3) Manufacture of Positive Electrode

97.7 wt% of Li_{1.0}Ni_{0.88}Co_{0.1}Al_{0.01}Mg_{0.01}0₂, 1.0 wt% of acetylene black, and 1.3 wt% of polyvinylidene fluoride are dispersed and mixed in an N-methyl-2-pyrrolidone solvent to prepare a cathode active material slurry. This is coated on the cross-section of an aluminum current collector, dried, and then compressed with a roll press to manufacture a positive electrode.

### (4) Manufacture of Rechargeable Lithium Battery Cell

An electrode stack structure is obtained by disposing a polyethylene porous separator between the negative and positive electrodes and housed in a case, and after injecting an electrolyte solution thereinto, the case is sealed under a reduced pressure, manufacturing a rechargeable lithium battery cell. The electrolyte solution is prepared by dissolving 1 M of LiPF₆ and 1 wt% of vinylene carbonate in a mixed solvent of ethylene carbonate and dimethyl carbonate in a volume ratio of 3:7.

### Example 2

A binder, a negative electrode, a positive electrode, and a rechargeable lithium battery cell are manufactured in the same manner as in Example 1 except that in the preparation of the negative electrode of (2) of Example 1, the binder, that is, the mixed solution of the copolymer (A) and the copolymer (B) used in the first negative active material slurry is changed from 0.8 wt% to 3.0 wt%.

### Example 3

A binder, a negative electrode, a positive electrode, and a rechargeable lithium battery cell are manufactured in the same manner as in Example 1 except that in the preparation of the negative electrode of (2) of Example 1, the binder, that is, the mixed solution of the copolymer (A) and the copolymer (B) used in the first negative active material slurry is changed from 0.8 wt% to 5.5 wt%.

### Comparative Example 1

A negative electrode, a positive electrode, and a rechargeable lithium battery cell are manufactured in the same manner as in Example 1 except that in the preparation of the negative electrode of (2) of Example 1, 1 wt% of carboxylmethyl cellulose and 2 wt% of styrene butadiene rubber are used instead of the binder of Example 1 in the first negative active material slurry.

### Comparative Example 2

A negative electrode, a positive electrode, and a rechargeable lithium battery cell are manufactured in the same manner as in Example 2 except that in the preparation of the negative electrode of (2) of Example 2, the binder of the first negative active material slurry is exchanged each other with the binder of the second negative active material slurry.

### Example 4

A negative electrode, a positive electrode, and a rechargeable lithium battery cell are manufactured in the same manner as in Example 2 except that in the binder of the first negative active material slurry of Example 2, the mixing ratio of the copolymer (A) and the copolymer (B) is changed into 30:70.

### Example 5

A negative electrode, a positive electrode, and a rechargeable lithium battery cell are manufactured in the same manner as in Example 2 except that in the binder of the first negative active material slurry of Example 2, the mixing ratio of the copolymer (A) and the copolymer (B) is changed into 50:50.

### Example 6

A negative electrode, a positive electrode, and a rechargeable lithium battery cell are manufactured in the same manner as in Example 2 except that in the binder of the first negative active material slurry of Example 2, the mixing ratio of the copolymer (A) and the copolymer (B) is changed into 70:30.

### Evaluation Example 1: Evaluation of Cell Thickness Changes during Cycling

The rechargeable lithium battery cells according to Examples 1 to 3 and Comparative Examples 1 and 2 are constant current-charged to 4.2 V at a 0.2 C rate and subsequently cut off at a 0.025 C rate in the constant voltage mode at 25 °C and then, measured with respect to initial cell thickness changes, and the results are shown in Table 1.

### Evaluation Example 2: Evaluation of Room Temperature Cycle-life Characteristics of Battery Cells

The rechargeable lithium battery cells of Examples 1 to 3 and Comparative Examples 1 and 2 are constant current-charged to a voltage of 4.2 V at a 0.5 C rate and subsequently, cut off in the constant voltage mode at a 0.025 C rate at 25 °C. Subsequently, the cells are discharged to 2.5 V at a 0.5 C rate, and this charge and discharge process is about 50 times repeated and then, evaluated with respect to capacity retention according to the cycle numbers, and the results are shown in Table 1.

**(Table 1)**

| | | Example 1 | Example 2 | Example 3 | Comparative Example 1 | Comparative Example 2 |
|---|---|---|---|---|---|---|
| Binder composit ion | Second layer | CMC/ SBR 3% | CMC/ SBR 3% | CMC/ SBR 3% | CMC/ SBR 3% | Prepared binder 3% |
| | First layer | Prepare d binder 0.8% | Prepare d binder 3% | Prepare d binder 5.5% | CMC/SBR 3% | CMC/SBR 3% |
| Initial thickness expansion rate (%) | | 18.2 | 12.7 | 10.8 | 21.6 | 18.4 |
| Capacity retention | | 80.6 | 95.0 | 87.3 | 72.3 | 79.7 |
| (@50 cycle, %) | | | | | | |

Referring to Table 1, Comparative Example 1 exhibits a maximum expansion rate up to 21.6%, Examples 1 to 3 exhibit an expansion rate of less than or equal to 18.2%, and Example 3 exhibits an expansion rate reduced to 10.8% at most. Accordingly, the binder according to an embodiment is applied to a negative active material layer to which a silicon-based active material is applied, effectively controlling the battery expansion problem by the silicon-based active material during the cycles.

In addition, as a content of the binder according to an embodiment is increased, the expansion-reducing effect is also increased.

Furthermore, referring to the capacity retention of Table 1, the capacity retention of Comparative Example 1 falls to about 72.3% at the 50^{th} cycle, but the capacity retention of Example 2 falls to about 95% at the 50^{th} cycle, which is significantly higher than that of Comparative Example 1. Accordingly, the binder of an embodiment is applied to a negative active material layer including a silicon-based active material, improving high temperature cycle-life characteristics.

In addition, referring to the result of Example 2 using the same amount of the binder in the first layer and Comparative Example 2 as shown in Table 1, Example 2, in which the binder according to an embodiment is applied to first negative active material slurry including Si, exhibits an initial expansion rate of 12.7%, which is reduced from 18.4% of that of Comparative Example 2 in which a general binder such as CMC and the like is applied to the first negative active material slurry including Si, thereby, improving cycle-life to 95%.

### Evaluation Example 3

The cells of Examples 4 to 6 are constant current-charged to a voltage of 4.2 V at a 0.2 C rate and subsequently, cut off at a 0.025 C rate in the constant voltage mode at 25 °C and then, measured with respect to initial cell thickness changes, and the results are shown in Table 2.

In addition, the cells of Examples 4 to 8 are constant current-charged at a 0.5 C rate to a voltage of 4.2 V and subsequently, cut off at a 0.025 C rate in the constant voltage mode at 25 °C. Subsequently, the cells are discharged to 2.5 V at a 0.5 C rate, and this charge and discharge process is about 50 times repeated, and then, capacity retention according to the cycle numbers, that is, cycle-life characteristics are evaluated, and the results are shown in Table 2.

**(Table 2)**

| | Example 4 | Example 5 | Example 6 |
|---|---|---|---|
| Copolymer (A) | 30 | 50 | 70 |
| Copolymer (B) | 70 | 50 | 30 |
| Thickness expansion rate (%) | 14.2 | 12.3 | 11.7 |
| Capacity retention (@50 cycles, %) | 92 | 94.1 | 92.3 |

Referring to Table 2, Examples 4 to 6 having the mixing ratio of the copolymer (A) and the copolymer (B) within a range of 30:70 to 70:30 in the binders used in the first layer exhibit an initial thickness expansion rate of less than or equal to 14.2% and thus a reduced expansion rate and in addition, capacity retention of greater than or equal to 92% and thus excellent cycle-life characteristics.

While this disclosure has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**<Description of Symbols>**

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A negative electrode for a rechargeable lithium battery, comprising
a current collector;
a first active material layer on the current collector; and
a second active material layer on the first active material layer,
wherein at least one of the first active material layer and the second active material layer includes a silicon-based active material and a binder,
the binder includes a copolymer (A) and a copolymer (B),
the copolymer (A) includes a unit (a-1) derived from a (meth)acrylic acid-based monomer and a unit (a-2) derived from a (meth)acrylonitrile monomer,
the copolymer (B) includes a unit (b-1) derived from an aromatic vinyl-based monomer and a unit (b-2) derived from an ethylenically unsaturated monomer that is at least one of an unsaturated carboxylic acid alkyl ester monomer, a (meth)acrylic acid-based monomer, an unsaturated carboxylic acid amide monomer, and a conjugated diene monomer.

2. The negative electrode of claim 1, wherein
the binder is in a form in which the copolymer (A) and the copolymer (B) are individually mixed with each other.

3. The negative electrode of claim 1, wherein
the binder is in a form in which at least a portion of the copolymer (B) is surrounded by the copolymer (A).

4. The negative electrode of claim 1, wherein
in the binder, a weight ratio of copolymer (A): copolymer (B) is 30:70 to 70:30.

5. The negative electrode of claim 1, wherein
the copolymer (A) includes 30 wt% to 70 wt% of the unit (a-1) derived from the (meth)acrylic acid-based monomer and 30 wt% to 70 wt% of the unit (a-2) derived from (meth)acrylonitrile based on 100 wt% of the copolymer (A).

6. The negative electrode of claim 1, wherein
the copolymer (A) further includes a unit (a-3) derived from other monomer copolymerizable with the (meth)acrylic acid-based monomer and/or the (meth)acrylonitrile monomer, and
the other monomer copolymerizable with the (meth)acrylic acid-based monomer and/or the (meth)acrylonitrile monomer includes a hydroxyl group-containing monomer, an amide group-containing monomer, or a combination thereof.

7. The negative electrode of claim 6, wherein
the unit (a-3) derived from another monomer copolymerizable with the (meth)acrylic acid-based monomer and/or the (meth)acrylonitrile monomer is greater than 0 wt% and less than or equal to 20 wt% based on 100 wt% of the copolymer.

8. The negative electrode of claim 1, wherein
a viscosity of the copolymer (A) in an aqueous solution of 7 wt% of solid content is 500 mPa·s to 5000 mPa s.

9. The negative electrode of claim 1, wherein
the unit (b-2) derived from an ethylenically unsaturated monomer is included in an amount of greater than or equal to 5 wt% based on 100 wt% of the copolymer (B).

10. The negative electrode of claim 1, wherein
any one of the first active material layer and the second active material layer includes the silicon-based active material and the binder, and
the other includes the carbon-based active material.

11. The negative electrode of claim 1, wherein
the first active material layer includes the silicon-based active material, the binder, and a carbon-based active material, and
the second active material layer includes a carbon-based active material.

12. The negative electrode of claim 1, wherein
the first active material layer and the second active material layer each include the silicon-based active material, the binder, and a carbon-based active material, and
a content of silicon included in the first active material layer is 2 to 25 times a content of silicon included in the second active material layer.

13. The negative electrode of claim 1, wherein
the first active material layer and the second active material layer each include the silicon-based active material, the binder, and a carbon-based active material, and
the negative electrode has a concentration gradient in which a content of silicon increases from the second active material layer to the first active material layer.

14. The negative electrode of claim 1, wherein
the silicon-based active material includes a silicon-carbon composite including silicon particles and a first carbon-based material.

15. The negative electrode of claim 14, wherein
the first carbon-based material includes artificial graphite, natural graphite, or a combination thereof.

16. The negative electrode of claim 1, wherein
the silicon-based active material includes a silicon-carbon composite including a core in which silicon particles and a second carbon-based material are mixed and a third carbon-based material surrounding the core.

17. The negative electrode of claim 16, wherein
the second carbon-based material is crystalline carbon including artificial graphite, natural graphite, or a combination thereof, and
the third carbon-based material is amorphous carbon including pitch carbon, soft carbon, hard carbon, a mesophase pitch carbonized product, calcined coke, a carbon fiber, or a combination thereof.

18. The negative electrode of claim 1, wherein
the active material layer including the silicon-based active material and the binder includes 0.1 wt% to 8 wt% of the binder based on 100 wt% of the active material layer.

19. The negative electrode of claim 1, wherein
the active material layer including the silicon-based active material and the binder further includes a carbon-based active material.

20. A rechargeable lithium battery, comprising
the negative electrode of any one of claims 1 to 19,
a positive electrode,
a separator between the negative electrode and the positive electrode, and
an electrolyte.
